Europäisches Patentamt

European Patent Office

Office européen des brevets

(11) Publication number: **0 123 486**
**B1**

## EUROPEAN PATENT SPECIFICATION

(45) Date of publication of patent specification: 06.09.89

(21) Application number: 84302555.2

(22) Date of filing: 13.04.84

(51) Int. Cl.⁴: **B 01 J 19/00,** B 01 J 13/00, C 09 K 5/06, C 08 F 2/00 // C08F20/00

(54) Exothermic reactions.

(30) Priority: 20.04.83 GB 8310662

(43) Date of publication of application: 31.10.84 Bulletin 84/44

(45) Publication of the grant of the patent: 06.09.89 Bulletin 89/36

(84) Designated Contracting States: BE DE FR GB IT NL SE

(56) References cited:
EP-A-0 087 859
US-A-4 003 426
US-A-4 335 237

(73) Proprietor: **ALLIED COLLOIDS LIMITED**
**P.O. Box 38 Low Moor**
**Bradford West Yorkshire, BD12 0JZ (GB)**

(72) Inventor: **Flesher, Peter**
**"Little Beck" Beck Lane**
**Bingley West Yorkshire (GB)**
Inventor: **Farrar, David**
**181 Westfield Lane**
**Idle Bradford West Yorkshire (GB)**
Inventor: **Johnson, Ian Michael**
**6 Amport Close**
**Brighouse West Yorkshire (GB)**

(74) Representative: **Lawrence, Peter Robin Broughton et al**
**GILL JENNINGS & EVERY 53-64 Chancery Lane**
**London WC2A 1HN (GB)**

Courier Press, Leamington Spa, England.

# EP 0 123 486 B1

**Description**

Some processes are exothermic, i.e. they generate heat. It is often necessary to conduct the process at a controlled temperature and so it is then necessary to provide adequate cooling to absorb some or all of the exothermic heat of the process. This may be achieved by conducting the process on a small volume of the process medium, so as to allow adequate dissipation of the heat, or by providing artificial cooling, for instance by applying a coolant to the outer surfaces of the reaction vessel or by including a cooling coil in the reaction vessel.

A particular problem arises with exothermic polymerisation reactions because of the difficulty of providing adequate cooling. For instance when conducting gel polymerisation (polymerisation of an aqueous solution of polymerisable material to form an aqueous polymer gel) it is necessary to keep the volume of the reaction mixture small and the concentration of the polymerisable material low. If this is not done the reaction mixture will dangerously overheat or, at best, a very inferior grade of polymer will be obtained. Even under optimum conditions polymers made by gel polymerisation generally have lower molecular weight and more chain branching than would be desired.

These problems are reduced when the aqueous polymer gel is made in the form of particles dispersed in a non-aqueous liquid by a process termed reverse phase polymerisation. In such a process a dispersion of droplets of aqueous polymerisable material is formed in a non-aqueous liquid in the presence of emulsifier and/or stabiliser and the polymerisable material is then polymerised. Depending on the materials and conditions used the polymerisation may be a reversed phase suspension polymerisation process or a reversed phas emulsion polymerisation process. Although overheating is not such a serious problem it is still necessary to avoid high concentrations of the polymerisable material in the droplets as otherwise they may be overheating, especially on a microscale within the droplets.

It is known to include in polymerisation mixtures materials additional to those that will dilute the reactants or that will enter into the reaction, either as polymerisable material or as an initiator. For instance British Patent Specification No. l,154,430 describes the polymerisation of acrylamide in aqueous solution that contains various dissolved inorganic salts, for the purpose of making an aqueous explosive. It is also known to include materials such as sodium chloride in order to increase the rate of polymerisation, but if this is applied to exothermic reactions it may increase the exothermicity problems rather than reduce them.

Direct cooling of an exothermic liquid medium, for instance by adding ice to the medium, is well known but this is inappropriate in many instances since it results in dilution of the medium. If the medium is the desired end product it will be more dilute than without the ice addition. If the desired end product is to be extracted from the medium then the ice addition will generally necessitate the provision of an additional concentration step.

The present invention is based in part on the surprising realisation that it is possible satisfactorily to control the temperature of an liquid medium during an exothermic process by including in the medium a particular type of heat sink material. In addition to including ice as such heat sink materials it is known to include various other materials in aqueous reaction media. For instance in British Patent Specification No 1,584,559 it is proposed to form a cross-linked polymeric matrix by dissolving or dispersing a heat sink material such as sodium sulphate decahydrate into an aqueous solution of linear polymer and then cross-linking the polymer. The cross-linking reaction is not exothermic. In US Patent No 4,003,426 a dispersion of a similar heat sink material in a curable polyester composition is formed and the composition is then cured, but the heat sink material is heated above its transition temperature before the reaction so that it cannot absorb the exotherm of the reaction by undergoing a phase change, and is dissolved in the reaction medium.

In our European Patent Publication No 87859 (which was not published at the priority date of this application) we describe various ways of forming polymeric matrices in which heat sink material such as sodium sulphate decahydrate is incorporated. In some of these processes an exothermic polymerisation is conducted in the presence of a solution of heat sink material. Since the material is in solution it cannot undergo a phase change and so does not cool the exothermic reaction mixture. In other processes the heat sink material is in particulate form during the polymerisation but the heat sink material is added whilst in its high energy state so that it undergoes an exothermic phase change, if the initial temperature of the reaction medium is below the transition temperature, thereby heating the medium. Additionally, polymerisation is conducted in a heat exchanger in which the final product is to remain. Such heat exchangers normally have very small dimensions, for instance such that the final matrix is a sheet or cylinder having a thickness of, for instance, 5 to 20 cm maximum. The resultant matrix is not, and cannot, be removed from the heat exchanger. Aqueous exothermic processes conducted on reaction media having dimensions as small as this do not suffer from serious overheating because the relatively large surface area of the reaction mixture ensures adequate cooling. Accordingly none of these previously published or unpublished proposals are relevant to the solution of the problem of finding a way of controlling the temperature of a bulk liquid medium in which an exothermic process is being conducted.

In U.S. Patent No.4,335,237 there is disclosed a process for making polymers in which the produce has a very low free water content and the polymerisation is conducted in the presence of sodium sulphate decahydrate. The exemplified reactions are in fact carried out in the absence of added free water, and all the water in the final produce is derived from the decahydrate. The process therefore incurs a high risk of

2

unwanted byproduct formation. Additionally the process would be difficult to conduct economically on a commercial scale due to the very high cost of anhydrous acrylamide.

In the example illustrating a gel polymerisation process, for the polymerisation of acrylamide, 2,2-azobis (isobutyronitrile) is used as the initiator in the presence of a very large amount of sodium sulphate decahydrate. The product is said to contain 2.8% unreacted acrylamide.

The initiator used in this example is only effective as such at temperatures above about 50°C and so presumably the reation mixture will have been deliberately heated to this temperature before polymerisation commences. This will have allowed at least some of the sodium sulphate decahydrate to change state endothermically by losing water to its lower state of hydration, so that the polymerisation reaction can proceed in the aqueous phase. If the polymerisation starts below the temperature at which water is released from the decahydrate, the polymerisation would be non-aqueous, with high risk of byproduct formation.

A problem with commercial bulk gel polymerisations is that it is necessary to maximise molecular weight, avoid cross linking and other insolubilisation reactions, eliminate low molecular weight components and conduct the process using convenient concentrations of monomer in water. Neither U.S. Patent No. 4,335,237 or EP Patent No. 87859 offer any suggestions as to how these objectives may be achieved.

In the invention a gel polymer is made by forming a mixture comprising water soluble polymerisable monoethylenically unsaturated monomer and heat sink material that is in a first thermodynamic state and is particulate and is substantially insoluble in the mixture and that can absorb heat and thereby undergo an endothermic change of state to a second thermodynamic state, and initiating exothermic polymerisation of the monomer and absorbing exothermic heat of polymerisation by conversion of the heat sink material from its first thermodynamic state to its second thermodynamic state, characterised in that the amount of the said heat sink material is inadequate to maintain the reaction temperature at the temperature of the change from the first thermodynamic state to the second thermodynamic state and, when all the heat sink material has been converted to the second thermodynamic state, the reaction temperature rises to a higher temperature at which residual monomer polymerises, the monomer is the initial reaction mixture is dissolved in water and the process is conducted as a bulk gel which contains at least 35% polymer and which is then comminuted and dried, and the heat sink material is converted during the process from the first thermodynamic state to a final thermodynamic state in which it is particulate and substantially insoluble in the comminutable gel.

The exothermic heat of polymerisation causes the temperature of the polymerisation mixture to rise from the temperature at which polymerisation starts up to the temperature at which the heat sink material holds the aqueous medium at a substantially constant temperature during the occurrence of the endothermic change of state to the second thermodynamic state. For instance, as shown in the examples, polymerisation may be initiated at 0°C. Holding the polymerisation mixture at a substantially constant temperature until most of the monomer polymerises, followed by allowing an increase in temperature for polymerisation of residual monomer, has the advantage of giving products of narrow molecular weight range and that are substantially free of unreacted monomer.

The second thermodynamic state may be the said final thermodynamic state and thus the endothermic change may result in the heat sink material being particulate and substantially insoluble in the polymer gel. Often however the process includes a further step in which the heat sink material is converted from the second thermodynamic state to the said final thermodynamic state, and this further step is essential if the heat sink material is not particulate and substantially insoluble when in its second thermodynamic state. Generally this conversion to the final state is effected by cooling the polymer gel whereupon the heat sink material, as a result of the cooling, undergoes an exothermic change of state from its second state to the desired final state. The product is normally removed from the vessel after the process is complete and the conversion may be effected while the polymer gel is in the reaction vessel or after it has been removed from the vessel. The first and final thermodynamic states may be identical but this is not essential provided that, in both states, the heat sink material is both particulate and substantially insoluble in the polymer gel.

It is essential that the heat sink material is particulate in its first state in order that it can undergo an endothermic change of state while remaining in the polymerisation mixture. It is essential that the heat sink material is particulate in its final state in order that it does not dilute the polymer gel undesirably and can remain as a dispersion of solid particulate material in the polymer gel.

The endothermic phase change is a change from one thermodynamic state to another and includes physical and chemical changes. For example the change may be a solid to liquid change, i.e. melting, or a solid to solid change, for example a change in the degree of hydration or some other chemical change between one solid state and another, or some other rearrangement of crystalline structure, or the phase change may be a combination of solid to solid and solid to liquid changes. When the second thermodynamic state includes a molten or other liquid phase, this phase preferably is substantially immiscible with the liquid medium.

The heat sink material undergoes an endothermic phase change at a temperature at or above that at which it is desired to hold the polymerisation and the amount of heat sink material in the polymerisation mixture is preferably such that the mixture is held at a substantially constant temperature for part of the duration of the process, this substantially constant temperature being the temperature of the endothermic change of state. This may be any temperature between the melting and boiling points of the liquid medium. Generally polymerisation reactions take place at substantially atmospheric pressure, and so the transition temperature of the heat sink material is usually in the range of from 1 to 100°C, when the medium is aqueous preferably in the range of from 10 to 100°C and more preferably in the range of from 25 to 80°C. Of course lower and higher temperatures than those quoted may be used for reactions which take place above or below atmospheric pressure. Suitably the specific latent heat of the heat sink material is at least 50 kJ.kg$^{-1}$, preferably at least 60 kJ.kg$^{-1}$ and is usually in the range of from 140 to 300 kJ.kg$^{-1}$.

The heat sink material is added in a quantity sufficient to absorb less than the whole exotherm and preferably so the polymerisation may be kept at a substantially constant temperature for a proportion of the reaction time, and when the phase change of the heat sink material is complete the temperature will rise. Generally sufficient heat sink material is added to absorb at least 50% of the exotherm and preferably at least 75% of the exotherm. Thus the main polymerisation reaction is conducted at a controlled low temperature and then post reaction, including polymerisation of residual monomer, is conducted at a higher temperature.

When the temperature does rise, its rise may be uncontrolled or it may be controlled at a substantially constant temperature T2, higher than the controlled low temperature, T1. This can be achieved by conducting the exothermic process in the presence of a first particulate heat sink material that undergoes its endothermic change of state at T1 and a second particulate heat sink material that undergoes its endothermic change of state at T2, the amount of the first material being such that the medium is held at the substantially constant temperature T1 for part of the process and the amount of second material being such that the temperature of the medium then rises and is held at a substantially constant temperature T2 for part of the process. Similarly, further incremental increases to still higher but constant temperatures can be achieved by including additional heat sink materials having different endothermic phase change temperatures. When more than one heat sink material is used the total amount of heat sink material is generally sufficient to absorb the entire exotherm but if desired the amount may be insufficient, in which event the temperature will rise, without control, after the full exotherm has been absorbed.

All of the heat sink material may be added to the polymerisation mixture at the start of the reaction or it may be added continuously throughout the progress of the reaction.

The amount of particulate heat sink material used in the invention will be selected having regard to the heat of polymerisation, the heat transfer rate, the heat capacity of the heat sink and any diluent, and the degree of temperature control that is required. Often the amount of particulate material (i.e. the amount that is additional to any heat sink material that has dissolved into the polymerisable material) is at least 0.5 parts and normally 1 to 5 parts, preferably 1 to 2 parts, by weight per part by weight of reactants.

Any heat sink material that is dissolved in the polymerisation mixture does not contribute to the temperature control and so the heat sink preferably has low or no solubility in the polymerisation mixture. If the material does have any solubility in the polymerisation mixture it must be present in an amount above saturation.

The use of materials that have an exothermic transition temperature from the second state to a final state at ambient, or preferably above ambient, permits the final state to be achieved by simple cooling, for instance indirect cooling by cooling water or exposure to the atmosphere. The endothermic change of state should therefore normally occur at a temperature above 20°C, and preferably above 25 or 30°C. Usually the exothermic change occurs at the same temperature.

Preferred heat sink materials for use in the invention are crystalline materials, generally inorganic crystalline materials. Preferred heat sink materials are ionic.

Preferred materials are hydrates, especially hydrates of inorganic salts. Such materials generally undergo a change in the degree of hydration during the endothermic phase change and this change may also be accompanied by melting. If the degree of hydration of the heat sink material decreases above the transition temperature, the reaction medium is diluted slightly by the water molecules released by the material. The dilution is reversed when the material is returned to below the transition temperature. Typical materials are calcium chloride hexahydrate (optionally mixed with potassium chloride), sodium sulphate decahydrate, disodium hydrogen phosphate dodecahydrate or heptahydrate, calcium nitrate tetrahydrate, calcium chloride tetrahydrate, sodium thiosulphate pentahydrate, sodium acetate trihydrate, sodium aluminium sulphate dodecahydrate, barium hydroxide octahydrate, zinc nitrate hexahydrate, sodium carbonate decahydrate, lithium chloride trihydrate, strontium bromide hexahydrate, calcium bromide hexahydrate, ferric bromide hexahydrate and tetrasodium pyrophosphate decahydrate. Particularly preferred materials for use in aqueous reactions are hydrates of sodium sulphate, sodium acetate and tetra-sodium pyrophosphate decahydrate as they are very effective heat sinks at preferred temperatures ranging between 25 and 80°C and have relatively low solubility in the liquid medium. For instance sodium sulphate decahydrate will generally be less than 5% soluble (so that a relatively low amount is wasted in solution) and tetrasodium pyrophosphate decahydrate is substantially insoluble in the reaction mixture.

The polymerisable material may be any polymerisable monomer or prepolymer or mixture thereof that is polymerisable by an exothermic reaction. Generally any prepolymer undergoes chain lengthening during polymerisation. Polymerisation that involves substantially only cross-linking, without significant chain lengthening (for instance as described in British Patent Specification 1,584,559 or U.S. Patent Specification 4,273,667) generally is not exothermic. The polymerisable material generally comprises polymerisable monomer and preferably comprises one or more ethylenically unsaturated monomers, especially acrylic monomers, or prepolymers formed from them. The monomers may include polyfunctional material to cause cross-linking. The polymer may be anionic, cationic or nonionic. Suitable acrylic monomers include (meth)acrylic acid and its salts, (meth)acrylic esters and amides, diallyldialkyl ammonium chlorides, 2-acryl-amido 2-methyl propane sulphonic acid and its salts, N-vinyl, N-methyl acetamide and allyl sulphonic acid and its salts. preferred monomers are acrylamide, sodium acrylate, dialkylaminoalkyl (meth)acrylates and dialkylaminoalkyl-(meth) acrylamides, including quaternised derivatives of the dialkylamino compounds, for instance quaternised dimethylaminoethyl acrylate. The monomer may be a Mannich base of acrylamide. Blends of two or more of the monomers are often preferred, so as to form copolymers. Cross-linking agents suitable for use with acrylic monomers include methylene bisacrylamide, methylolacrylamide and soluble polyethylene glycol diesters. Other monomers that may be used include vinyl pyrrolidinone and vinyl sulphonic acid and the monomers necessary to form styrene maleic anhydride copolymers or dimethylamine-epichlorhydrin polymers. Polymerisable materials that will react exothermically to form thermosetting polymers, such as certain epoxides and polyesters, may be used.

A particular preferred process of the invention is one in which a water soluble polymer is made by exothermic gel polymerisation of a bulk aqueous solution of polymerisable material and the heat sink material is included in the aqueous solution. Whereas gel polymerisation processes normally have to be conducted at a solids concentration of below 35% it is now possible to operate them satisfactorily at solids concentrations of 50 to 60% or even more and to obtain, at these high concentrations, polymers that are at least as satisfactory and are generally more satisfactory than the polymers obtained at lower concentrations. Thus it is possible to obtain polymers of increased molecular weight and reduced chain branching.

The product of the process is an aqueous polymer gel throughout which is dispersed the particulate heat sink material in its final state. The gel is removed from the reaction vessel and comminuted in one or more stages and dried. This drying may be before, during or after the comminution.

Conveniently the heat sink material is an inorganic hydrate which above the transition temperature undergoes a change to a state of lower hydration in which it is particulate. Comminution of the product gel is carried out while the heat sink material is in its state of lower hydration and the warm particles are then dehydrated, e.g. by warm air.

Comminution is, at least in the final stage, generally by grinding and the presence of particulate in the gel, greatly facilitates the grinding. The presence of the particulate heat sink material renders the gel more friable and more readily ground. Additionally, irrespective of the state of the heat sink material at the time of grinding, the gel will generally have a higher polymer content than polymer gels made by conventional methods and so there is less water to remove by drying and the product is less sticky and so is easier to grind.

In the following examples, Examples 2 and 3 F and G illustrate the invention.

## Example 1

25 g methylchloride quaternised dimethylaminoethyl acrylate, 25 g crystalline acrylamide and 50 g water are mixed and cooled to 0°C and then 82.4 g sodium sulphate decahydrate are added. The resultant slurry is transferred to a 200 g capacity Deware flask equipped with stirrer and nitrogen bubbler. The mix is blown with nitrogen for 10 minutes whilst being gently stirred, the nitrogen bubbler was then withdrawn from the liquid and 5 cm$^3$ 1% aqueous ammonium persulphate and 1 cm$^3$ 0.7% aqueous ferrous ammonium sulphate are added. Polymerisation commences immediately. The stirrer is stopped when the temperature has risen to 20°C. The temperature continues to rise to about 32°C at which it remains constant.

The product is a friable gel which can be cut into 6 mm strips while still at 32°C, dried at 70°C and ground to a fine powder. This product is designated below as Product A.

The process is repeated using 41.2 g of the sodium sulphate instead of 82.4 g. The powder is designated Product B.

The process is repeated again omitting sodium sulphate. The product is designated Product C.

The process is repeated using an extra 82.4 g water in place of the sodium sulphate. The product is designated Product D.

The intrinsic viscosity and flocculation activity of the products are determined. To determine flocculation activity 10 cm$^3$ 0.1% active polymer solution is added to 100 cm$^3$ sewage sludge stirred at 1000 rpm. The flocculated sludge is stirred for a further 25 seconds and the degree of flocculation measured by capillary suction time measurements (CST). The sewage sludge is a digested primary/activated sludge ex Rotherham sewage works. The results are shown in the following table.

| Product | Intrinsic Viscosity* $(dlg^{-1})$ | Average CST (secs) |
|---|---|---|
| A | 6.18 | 27.4 |
| B | 5.99 | 36.0 |
| C | 2.83 | 272.1 |
| D | 4.14 | 80.6 |
| Water | —— | 2140 |

*Intrinsic viscosity is measured in 3M NaCl at 25°C.

The increase in intrinsic viscosity in Products A and B compared to D and, especially, C indicates the increased molecular weight obtainable by the inclusion of sodium sulphate. The lower CST values for products of the invention compared to Products D, and especially C, indicate the greatly increased effectiveness of the polymers made in the invention.

Example 2

The process of Example 1 can be repeated using a mixture of sodium sulphate decahydrate with sodium acetate trihydrate. The polymerisation will then proceed at about 32°C for most of its time but can then be allowed to go to a temperature of about 50 to 60°C (at which it will be held by the sodium acetate trihydrate) to reduce free monomer in the gel.

Example 3

88 g of 100% acrylamide, 212.5 g of a 70% solution of methyl chloride quaternised dimethylaminoethyl acrylate, 0.1 g of 40% tetra sodium ethylenediaminetetraacetate and 15 g of adipic acid were admixed to give a homogeneous solution and then adjusted to pH 3.5.

100 g aliquots were taken and varying quantities of sodium sulphate decahydrate added. The resultant slurries were cooled to 0°C and transferred to pre-cooled vacuum flasks. After thoroughly deoxygenating with nitrogen gas the monomer mixes were initiated with 0.3 ml 0.5% aqueous solution of $KBrO_3$, and 0.26 ml 1% aqueous solution of $Na_2SO_3$.

The following results were obtained.

| PRODUCT | E | F | G | H |
|---|---|---|---|---|
| g $Na_2SO_4.10H_2O/$ 100g monomer | 20 | 40 | 60 | 0 |
| Max. temperature °C | 100 | 82 | 66 | >110°C |
| Time for complete polymerisation | 20 min | $5\frac{1}{2}$hr | 4 hr | <2 mins |

Polymerisation E showed no apparent thermal plateau at low temperature but the time for complete polymerisation was increased and the full potential exotherm was not observed.

Polymerisations F and G remained at about 30°C for 90 and 130 mins. before continuing to the higher temperature.

Polymerisation H rapidly reached a temperature of greater than 100°C and the resultant gel was forceably ejected from the flask by the steam generated. The resultant gel was difficult to handle due to the large number of bubbles entrained in the product.

Polymers E—G were friable gels which readily ground and dried to give fine products in which the sodium sulphate remains, at ambient temperatures, in its lower state of hydration, e.g. as anhydrous sodium sulphate.

**Claims**

1. A process in which a gel polymer is made by forming a mixture comprising water soluble polymerisable monoethylenically unsaturated monomer and heat sink material that is in a first thermodynamic state and is particulate and is substantially insoluble in the mixture and that can absorb heat and thereby undergo an endothermic change of state to a second thermodynamic state, and initiating exothermic polymerisation of the monomer and absorbing exothermic heat of polymerisation by conversion of the heat sink material from its first thermodynamic state to its second thermodynamic state, characterised in that the amount of the said heat sink material is inadequate to maintain the reaction temperature at the temperature of the change from the first thermodynamic state to the second thermodynamic state and, when all the heat sink material has been converted to the second thermodynamic state, the reaction temperature rises to a higher temperature at which residual monomer polymerises, the monomer in the initial reaction mixture is dissolved in water and the process is conducted as a bulk gel polymerisation to form a comminutable bulk gel which contains at least 35% polymer and which is then comminuted and dried and the heat sink material is converted during the process from the first thermodynamic state to a final thermodynamic state in which it is particulate and is insoluble in the comminutable gel.

2. A process according to claim 1 conducted in the presence of two of the said heat sink materials, one of the said heat sink materials undergoing the endothermic change of state at temperature T1 and the second of the said materials undergoing the endothermic change of state at temperature T2, higher than T1, in which the amounts of the materials are such that the medium is held at a substantially constant temperature T1 for part of the process and then at a substantially constant temperature T2 for part of the process.

3. A process according to either preceding claim in which the heat sink material comprises a hydrate of an inorganic salt and the phase change includes a change in the degree of hydration of the inorganic salt.

4. A process according to any preceding claim in which the heat sink material comprises sodium sulphate decahydrate.

5. A process according to any preceding claim in which the heat sink material is an inorganic hydrate that absorbs exothermic heat of polymerisation and thereby undergoes an endothermic change of state to a state of lower hydration in which it is particulate, the gel is comminuted while the heat sink material is in the state of lower hydration and the comminuted gel is dried.

6. A process according to any preceding claim in which the gel contains 35 to 60% polymer.

7. A process according to any preceding claim in which the amount of the heat sink material is sufficient to hold the polymerising mixture at a substantially constant temperature for part of the process and is sufficient to absorb at least 75% of the exotherm.

**Patentansprüche**

1. Verfahren, worin ein Gelpolymer hergestellt wird, indem man eine Mischung bildet, die ein wasserlösliches, polymerisierbares, monoethylenisch ungesättigtes Monomer und ein Wärmeableitmaterial, das sich in einem ersten thermodynamischen Zustand befindet und Partikelform aufweist und im wesentlichen in der Mischung unlöslich ist und das Wärme absorbieren und dabei eine endotherme Zustandsänderung in einen zweiten thermodynamischen Zustand durchlaufen kann, und die exotherme Polymerisation des Monomers initiiert und indem die exotherme Polymerisationswärme durch Übergang des Wärmeableitmaterials von dessen ersten thermodynamischen Zustand in dessen zweiten thermodynamischen Zustand absorbiert wird, dadurch gekennzeichnet, daß die Menge des Wärmeableitmaterials nicht ausreicht, um die Reaktionstemperatur bei der Temperatur des Übergangs vom ersten thermodynamischen Zustand in den zweiten thermodynamischen Zustand aufrecht zu erhalten, und daß, wenn das ganze Wärmeableitmaterial in den zweiten thermodynamischen Zustand überführt worden ist, die Reaktionstemperatur auf eine höhere Temperatur ansteigt, bei der restliches Monomer polymerisiert, daß das Monomer der anfänglichen Reaktionsmischung in Wasser gelöst wird und daß das Verfahren als Gelpolymerisation in Masse durchgeführt wird, bei der ein zerkleinerbares Gel gebildet wird, das mindestens 35% Polymer enthält und das dann zerkleinert und getrocknet wird, und daß das Wärmeableitmaterial während des Verfahrens von dem ersten thermodynamischen Zustand in einen thermodynamischen Endzustand überführt wird, in dem es in Partikelform vorliegt und in dem zerkleinerbaren Gel unlöslich ist.

2. Verfahren nach Anspruch 1, das in der Gegenwart von zwei der Wärmeableitmaterialien durchgeführt wird, wobei eines der Wärmeableitmaterialien die endotherme Zustandsänderung bei einer Temperatur T1 und das zweite dieser Materialien die endotherme Zustandsänderung bei einer Temperatur T2, die höher ist als T1, durchläuft und worin die Mengen der Materialien so sind, daß das Medium während eines Teils des Verfahrens bei einer im wesentlichen konstanten Temperatur T1 und dann während eines Teils des Verfahrens bei einer im wesentlichen konstanten Temperatur T2 gehalten wird.

3. Verfahren nach einem der vorangehenden Ansprüche, worin das Wärmeableitmaterial das Hydrat eines anorganischen Salzes umfaßt und der Phasenübergang eine Änderung im Hydratationsgrad des anorganischen Salzes einschließt.

4. Verfahren nach einem der vorangehenden Ansprüche, worin das Wärmeableitmaterial Natriumsulfatdecahydrat umfaßt.

5. Verfahren nach einem der vorangehenden Ansprüche, worin das Wärmeableitmaterial ein anorganisches Hydrat ist, das exotherme Polymerisationswärme absorbiert und dabei eine endotherme Zustandsänderung in einen Zustand niedrigerer Hydratation, in dem es in Partikelform vorliegt, durchläuft,

7

das Gel zerkleinert wird, während das Wärmeableitmaterial im Zustand niedrigerer Hydratation ist, und das zerkleinerte Gel getrocknet wird.

6. Verfahren nach einem der vorangehenden Ansprüche, worin das Gel 35 bis 60% Polymer enthält.

7. Verfahren nach einem der vorangehenden Ansprüche, worin die Menge des Wärmeableitmaterials ausreichend ist, um die polymerisierende Mischung während eines Teils des Verfahrens bei einer im wesentlichen konstanten Temperatur zu halten und wenigstens 75% des abgegebenen Wärme zu absorbieren.

**Revendications**

1. Un procédé selon lequel un polymère en gel est préparé par formation d'un mélange comprenant un monomère monoéthyléniquement insaturé polymérisable soluble dans l'eau et un matériau de dissipation thermique qui est dans un premier état thermodynamique et qui est particulaire et substantiellement insoluble dans le mélange et qui peut absorber de la chaleur et subir ainsi un changement d'état endothermique dans un second état thermodynamique, et par initiation de la polymérisation exothermique du monomère et absorption de la chaleur exothermique de polymérisation par conversion du matériau de dissipation thermique d'un premier état thermodynamique dans un second état thermodynamique, caractérisé en ce que la quantité dudit matériau dissipateur thermique est inadéquate pour maintenir la température de la réaction à la température de changement du premier état thermodynamique dans le second état thermodynamique, et lorsque la totalité du matériau dissipateur thermique a été convertie dans le second état thermodynamique, la température de réaction s'élève à une température supérieure à laquelle le monomère résiduel se polymérise, le monomère dans le mélange réactionnel initial est dissous dans l'eau et le procédé est conduit sous la forme d'une polymérisation en gel en vrac pour former un gel en vrac broyable qui contient au moins 35% de polymère et qui est ensuite broyé et séché et le matériau de dissipation thermique est converti durant le procédé d'un premier état thermodynamique dans un état thermodynamique final dans lequel il est particulaire et est insoluble dans le gel broyé.

2. Un procédé selon la revendication 1 conduit en présence de deux desdits matériaux dissipateurs thermiques, l'un de desdits matériaux dissipateurs thermiques subissant le changement d'état endothermique à une température de T1 et le second desdits matériaux subissant le changement d'état endothermique à une température T2, supérieure à T1, selon lequel les quantités de matériaux sont telles que le milieu est maintenu à une température substantiellement constante T1 pendant une partie du procédé et ensuite en une température substantiellement constante T2 pendant une partie du procédé.

3. Un procédé selon l'une quelconque des revendications précédentes, selon lequel le matériau dissipateur thermique comprend un hydrate d'un sel inorganique et le changement de phase inclut un changement du degré d'hydratation du sel inorganique.

4. Un procédé selon l'une quelconque des revendications précédentes, selon lequel le matériau dissipateur thermique comprend du décahydrate de sulfate de sodium.

5. Un procédé selon l'une quelconque des revendications précédentes, selon lequel le matériau dissipateur thermique est un hydrate inorganique qui absorbe la chaleur exothermique de polymérisation et subit ainsi un changement d'état endothermique dans un état d'hydratation inférieure dans lequel il est particulaire, le gel est broyé pendant que le matériau dissipateur thermique est dans l'état d'hydratation inférieure et le gel broyé est séché.

6. Un procédé selon l'une quelconque des revendications précédentes, selon lequel le gel contient 35 à 60 % de polymère.

7. Un procédé selon l'une quelconque des revendications précédentes, selon lequel la quantité de matériau dissipateur thermique est suffisante pour maintenir le mélange de polymérisation à une température substantiellement constante pendant une partie du procédé et est suffisante pour absorber au moins 75 % de l'exothermie.